(19) **Europäisches Patentamt / European Patent Office / Office européen des brevets**

(11) **EP 1 250 567 B1**

(12) # EUROPÄISCHE PATENTSCHRIFT

(45) Veröffentlichungstag und Bekanntmachung des Hinweises auf die Patenterteilung:
**27.09.2017 Patentblatt 2017/39**

(51) Int Cl.:
*G01D 3/036* (2006.01)   *G01D 3/02* (2006.01)
*G01D 18/00* (2006.01)   *B60G 17/015* (2006.01)

(21) Anmeldenummer: **00992078.6**

(22) Anmeldetag: **21.12.2000**

(86) Internationale Anmeldenummer:
**PCT/EP2000/013064**

(87) Internationale Veröffentlichungsnummer:
**WO 2001/050090 (12.07.2001 Gazette 2001/28)**

(54) **VERFAHREN ZUM ERSTELLEN EINER KORREKTURWERTTABELLE UND EINES SENSORSIGNALS SOWIE SENSOR-MODUL**

METHOD FOR ESTABLISHING A TABLE OF CORRECTION VALUES AND SENSOR SIGNAL AND A SENSOR MODULE

PROCEDE POUR ETABLIR UNE TABLE DE VALEURS DE CORRECTION ET UN SIGNAL DE CAPTEUR, ET MODULE A CAPTEURS

(84) Benannte Vertragsstaaten:
**DE FR GB**

(30) Priorität: **05.01.2000 DE 10000166**

(43) Veröffentlichungstag der Anmeldung:
**23.10.2002 Patentblatt 2002/43**

(73) Patentinhaber: **Continental Teves AG & Co. oHG 60488 Frankfurt (DE)**

(72) Erfinder:
• **BURGDORF, Jochen 63075 Offenbach (DE)**
• **FENNEL, Helmut 65812 Bad Soden (DE)**
• **HERBST, Ralf 56355 Nastätten (DE)**
• **KITZ, Rainer 61130 Nidderau (DE)**

(56) Entgegenhaltungen:
DE-A- 4 228 893   DE-A- 4 340 719
US-A- 5 038 306   US-A- 5 228 337
US-A- 5 247 467

**Beschreibung**

Die Erfindung betrifft ein Verfahren zum Erstellen einer Korrekturwerttabelle zur Erkennung von Nullpunktabweichungen in einem Sensor-Modul eines Fahrzeugs, in dem mindestens ein, vorzugsweise mindestens zwei die Bewegung des Fahrzeugs erfassende Sensor(en) und mindestens ein Temperatursensor vorgesehen sind und ein Verfahren und ein Sensor-Modul zum Ermitteln eines korrigierten Sensorsignals.

Systeme zum Regeln oder Steuern unterschiedlicher fahrzeugdynamischer Größen eines Kraftfahrzeugs werden immer komplexer, da zunehmend neue Funktionen im Kraftfahrzeug implementiert werden. Bekannt sind Systeme zur Bremsregelung und/oder Steuerung (ABS), Systeme zur Antriebsschlupfregelung (ASR), Systeme zur Lenkungssteuerung und/oder -regelung, Systeme zur Fahrwerksregelung bzw. -Steuerung, Systeme zur Fahrdynamikregelung (ESP) und Systeme zum Motormanagement.

Solchen Systemen ist gemein, daß sie Informationen über die Bewegung des Fahrzeugs relativ zur Straße benötigen. Erforderlich ist hierbei vor allem die Messung der Fahrzeuglängsbewegung, der Fahrzeugquerbewegung und der Fahrzeuggierbewegung mit geeigneten Sensoren.

Drehraten- oder Gierratensensoren, die die Coriolis-Kraft ausnutzen, werden zur Bestimmung der Bewegung um die Hochachse des Fahrzeugs eingesetzt. Allgemein besitzen solche Sensoren eine bewegliche mechanische Struktur, welche einen zu einer periodischen Schwingung angeregten elektrisch-mechanischen Wandler aufweist. Erfährt der Sensor eine Drehung um eine Achse senkrecht zur angeregten Schwingung, so führt die Bewegung der Schwingung zu einer Coriolis-Kraft, die proportional zur Meßgröße, das heißt der Winkelgeschwindigkeit, ist. Durch die Coriolis-Kraft wird eine zweite zur angeregten Schwingung orthogonale Schwingung in einem mechanisch-elektrischen Wandler angeregt. Diese zweite Schwingung kann durch verschiedene Meßverfahren erfaßt werden, wobei die erfaßte Größe als Maß für die auf den Drehratensensor wirkende Drehrate dient.

Die in einem Sensor-Modul (PC/EP99/01785) eingesetzten Sensoren für Gierrate, Längs- und Querbeschleunigung besitzen Arbeitspunkt- bzw. Nullpunktfehler, die abgesehen von Fertigungstoleranzen und Alterungseffekten im wesentlichen von der Umgebungstemperatur des Sensor-Moduls abhängig sind.

Die Druckschrift DE 42 28 893 A beschreibt die Korrektur eines Sensorsignals über Temperatur, wobei die Korrekturdaten in einem nicht-flüchtigen Speicher abgelegt werden. Es werden zwei Modi offenbart, nämlich ein Kalibriermodus und ein Betriebsmodus. In dem Kalibriermodus werden die Kalibrierdaten bestimmt und im nicht-flüchtigen Speicher abgelegt. Im Betriebsmodus werden diese Daten zur Korrektur des gemessenen Sensorsignals genutzt.

Die Druckschrift US 5 038 306 beschreibt die Korrektur von Temperatur-, Installations- bzw. Anwendungseinflüssen bei Wandlern, die für Beschleunigungssensoren verwendet werden. Es wird offenbart, dass eine Regeleinheit in zwei Modi betrieben wird, nämlich in einem Eichmodus und in einem Betriebsmodus. In dem Eichmodus werden Beschleunigungssensoren bekannten Beschleunigungen bei bekannten Temperaturen ausgesetzt. Anhand dessen werden von der Regeleinheit Parameter für den entsprechenden Wandler ermittelt. In dem Betriebsmodus wird das Sensorsignal entsprechend der ermittelten Parameter in Abhängigkeit der gemessenen Temperatur korrigiert.

Es ist bekannt, bei der Herstellung eines Gierratensensors Maßnahmen zu ergreifen, die diesen Gierratensensor im Hinblick auf seinen Nullpunktfehler verbessern. Diese, die Bewegung eines Fahrzeugs erfassenden Sensoren dahingehend zu verbessern, daß sie nur geringe Abweichungen vom Arbeits- oder Nullpunkt bei unterschiedlichen, von der Betriebstemperatur abweichenden Temperaturen aufweisen, führt zu einem Kostenanstieg der Sensoren, der bei dem Masseneinsatz in der Fahrzeugindustrie nicht toleriert wird. Andererseits werden an eine die Sicherheit des Fahrzeugs und insbesondere der Fahrzeuginsassen erhöhende Fahrdynamikregelung (ESP) hohe Anforderungen an die Regelgüte und damit an die Genauigkeit der Erfassung der Ist-Bewegung des Fahrzeugs gestellt.

Der Erfindung liegt daher die Aufgabe zugrunde, ein Verfahren und einen Sensor-Modul anzugeben, die eine genaue Ermittlung eines Sensorsignals über den gesamten Arbeitsbereich eines die Bewegung eines Fahrzeugs erfassenden Sensors erlauben.

Diese Aufgabe wird mit den Merkmalen der unabhängigen Ansprüche gelöst. Vorteilhafte Ausführungsformen der Erfindung sind in den Unteransprüchen angegeben.

Beim Verfahren zum Erstellen einer Korrekturwerttabelle zur Erkennung von Signalabweichungen in einem Sensor-Modul eines Fahrzeugs, in dem mindestens ein, vorzugsweise mindestens zwei die Bewegung des Fahrzeugs erfassende Sensor(en) und mindestens ein Temperatursensor vorgesehen sind, werden Abweichungen von den Nullpunkten des Sensors in einem Kalibriermodus beim Durchlaufen eines Temperaturprofils ermittelt und die Abweichungen von den Nullpunkten des Sensors klassifiziert. Der Sensor befindet sich im Kalibriermodusin Ruhe. Dabei werden diesen Abweichungen Temperaturwerte bzw. -klassen zugeordnet. Eingangsgröße der Tabelle ist die Abweichung vom Nullpunkt, der Nullpunktfehler, und die Temperatur, bei der der Nullpunktfehler auftritt. Die Temperaturwerte bzw. -klassen und die Abweichungen oder Größen, die diese Abweichungen widerspiegeln, werden als Korrekturwerte gespeichert.

Eine weitere Korrektur der Abweichung vom Nullpunkt ist ein Lernvorgang. Dem Sensor-Modul wird über einen seriellen Datenbus von einem Fahrdynamikregler eine Fahrzeugzustandsgröße, nämlich Fahrzeugstillstand, zur Verfügung gestellt. Das Sensor-Modul ermittelt die Temperatur und die Abweichung vom Nullpunkt mindestens eines Sensors bei Fahrzeugstillstand und verwendet die bei Fahrzeugstillstand ermittelte Abweichung als Korrekturwert für die bei dem Temperaturwert bzw. in der Temperaturklasse abgelegte Abweichung.

Zur Korrektur des abgelegten Korrekturwertes wird der Mittelwert zwischen dem in der Tabelle abgelegten und dem bei Fahrzeugstillstand ermittelten Abweichung berechnet und in der Tabelle als neuer Korrekturwert gespeichert.

Der in dem Fahrdynamikregler ermittelte Fahrzeugstillstand kann über den Verlauf der Gierrate und/oder der Längs- und oder Querbeschleunigung und/oder die Raddrehzahlen ermittelt werden. Der Fahzeugstillstand kann hinsichtlich seiner Werte oder hinsichtlich seines Zeitverlaufs bestimmten Bedingungen genügen. Insbesondere kann gefordert werden, daß diese Fahrzeugzustandsgröße eine gewisse Konstanz zeigt (innerhalb eines Wertbereichs innerhalb eines Zeitfensters), oder daß die Veränderung der Fahrdynamik (von verzögerter Fahrt zu Fahrzeugstillstand) kleiner als ein Schwellenwert ist.

Zum Ermitteln eines korrigierten Sensorsignals nach Maßgabe einer erfassten Temperatur in einem Sensor-Modul eines Fahrzeugs, in dem mindestens ein, vorzugsweise mindestens zwei die Bewegung des Fahrzeugs erfassende Sensor(en) und mindestens ein Temperatursensor vorgesehen sind, wird eine Korrekturwerttabelle erstellt und in dem Sensor-Modul gespeichert, die Temperatur des Sensor-Moduls während des Betriebs des Fahrzeugs online mittels des Temperatursensors ermittelt, ein Korrekturwert aus der Tabelle nach Maßgabe des Werts der Temperatur ausgelesen, und das Sensorsignal mit dem Korrekturwert korrigiert. Durch die Korrektur des Nullpunktfehlers wird die ESP Funktionalität, wie z.B. die Symmetrie der geregelten Fahrzeugbewegung beim Durchfahren von Kurven, genauer.

Für einzelne oder mehrere Werte erfolgt die Korrektur des von dem Sensor-Modul zur Verfügung gestellten Sensorsignals direkt mit der abhängig von dem Temperaturwert bzw. der Temperaturklasse in der Tabelle abgespeicherten Abweichung nach der Beziehung $\dot{\psi}_{Sensor-Modul} = \dot{\psi}_{Sensor} - \dot{\psi}_0(\tau)$. Für andere Nullpunktfehler, die nicht in der Tabelle abgelegt sind, können Korrekturwerte durch Interpolation mit geeigneten Verfahren berechnet werden.

Zweckmäßigerweise wird während des Betriebs des Fahrzeugs die Temperatur des Sensor-Moduls fortlaufend erfasst und der Korrekturwert $\dot{\psi}(\tau)$ für das Sensorssignal $\dot{\psi}_{Sensor-Modul}$ nach der Beziehung

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times \left(\tau - \tau_n\right)$$

$$\text{für } \quad \tau_n \leq \tau < \tau_{n+1}$$

berechnet, mit $\dot{\psi}_0(\tau)$ = Korrekturwert bei der erfassten Temperatur, $\dot{\psi}_0(\tau_n)$ = Korrekturwert bei dem in der Korrekturwerttabelle abgelegten niedrigeren Temperaturwert, $\dot{\psi}_0(\tau_{n+1})$ = Korrekturwert bei dem in der Korrekturwerttabelle abgelegten höheren Temperaturwert, $\tau$ = erfasster Temperaturwert, $\tau_n$ = niedrigerer Temperaturwert, $\tau_{n+1}$ = höherer Temperaturwert. Die so ermittelte Abweichung vom Arbeitspunkt wird in der Korrekturwerttabelle gespeichert. Die Korrekturwertabelle wird über dieses Lernverfahren "aufgefüllt" und enthält mit zunehmender Betriebsdauer zunehmend mehr Korrekturwerte. Die Nullpunktfehler des Sensorsignals (welches an das übergeordneten Steuergrät übertragen wird) wird mit zunehmenden Korrekturwerten geringer.

Zur Verringerung des Aufwands bei der Erstellung der Korrekturwerttabelle wird ein linearer Verlauf der Abweichungen vom Nullpunkt innerhalb eines Toleranzbandes bei dem Sensor vorgegeben und vorzugsweise nur zwei Abweichungen des Nullpunkts in einem Bereich der maximal und minimal zulässigen Temperatur des Sensor-Moduls ermittelt und als Korrekturwerte abgespeichert. Die weiteren Korrekturwerte werden durch Interpolation mit geeigneten Verfahren bestimmt, vorzugsweise nach der vorstehend bereits genannten Beziehung

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times \left(\tau - \tau_n\right)$$

$$\text{für } \quad \tau_n \leq \tau < \tau_{n+1}$$

Ein Verfahren zum Ermitteln eines korrigierten Sensorsignals nach Maßgabe einer erfassten Temperatur in einem Sensor-Modul eines Fahrzeugs, in dem mindestens ein, vorzugsweise mindestens zwei die Bewegung des Fahrzeugs erfassende Sensor(en) und mindestens ein Temperatursensor vorgesehen sind, sieht vor, eine Abweichung von dem Nullpunkt des Sensorsignals in einem Kalibriermodus bei einer vorgegebenen Temperatur zu ermitteln und den um die Abweichung korrigierten Nullpunkt des Sensorsignals bei dem Temperaturwert als Korrekturwert zu speichern, die Temperatur des Sensor-Moduls während des Betriebs des Fahrzeugs zu ermitteln, den Korrekturwerts aus dem Speicher auszulesen, und das Sensorsignals mit dem einzelnen Korrekturwert (Offsetwert) nach der Beziehung $\dot{\psi}_{Sensor-Modul} = \dot{\psi}_{Sensor} - \dot{\psi}_0(\tau)$ zu korrigieren. Durch das Verfahren wird eine Versetzung (Offset) des vorzugsweise bei oder in der Nähe der Betriebstemperatur erfaßten bzw. gemessenen Nullpunktes um die Abweichung vorgenommen und in dem Speicher des Sensor-Moduls abgelegt. Durch diesen Kalibriermodus wird der Anteil des Nullpunktfehlers der durch die Bauteiltoleranzen verursacht wird kompensiert.

Zum Erstellen von weiteren Korrekturwerten wird dem Sensor-Modul über einen seriellen Datenbus von einem Fahrdynamikregler eine Fahrzeugzustandsgröße, nämlich eine Größe die den Fahrzeugstillstand wiedergibt, zur Verfügung gestellt. Das Sensor-Modul ermittelt bei Fahrzeugstillstand die Temperatur und die Abweichung von dem Nullpunkt mindestens eines Sensorsignals, wobei die bei Fahrzeugstillstand ermittelte Abweichung als Korrekturwert für die bei dem Temperaturwert abgelegte Abweichung oder als weiterer Korrekturwert verwendet wird. Der erste und die weiteren so ermittelten Korrekturwerte werden in einer Korrekturwerttabelle, vorzugsweise in einem nicht-flüchtigen Speicher abgelegt. Während des Betriebs des Fahrzeugs wird die Temperatur des Sensor-Moduls fortlaufend erfasst und der Korrekturwert $\dot{\psi}(\tau)$ für das Sensorssignal $\dot{\psi}_{Sensor\text{-}Modul}$ nach der Beziehung

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times \left( \tau - \tau_n \right) \qquad \qquad mit \quad n \geq 2$$
$$\text{für} \quad \tau_n \leq \tau < \tau_{n+1}$$

berechneten und die Tabelle mit den berechneten Korrekturwerten ergänzt. Der absolute Nullpunkt kann nach dem vorstehend bereits beschriebenen Verfahren bei Fahrzeugstillstand korrigiert werden.

Ein Sensor-Modul zum Ermitteln eines korrigierten Sensorsignals nach Maßgabe einer erfassten Temperatur, weist mindestens einen, vorzugsweise mindestens zwei die Bewegung des Fahrzeugs erfassende Sensor(en) und mindestens einen Temperatursensor auf. Ferner ist eine Signalverarbeitungseinheit und ein Digitalausgang mit einer Schnittstelle für einen Datenbus vorgesehen. Das Sensor-Modul weist darüber hinaus einen nicht-flüchtigen Speicher zum Ablegen einer Korrekturwerttabelle auf. In dem Sensor-Modul sind mindestens ein Gierratensensor, ein Längs- und ein Querbeschleunigungssensor sowie zwei Temperatursensoren angeordnet.

Ein Ausführungsbeispiel der Erfindung ist in der Zeichnung dargestellt und wird im Folgenden näher beschrieben.

Es zeigen

Fig. 1 ein Blockschaltbild eines Sensor-Moduls nach der Erfindung

Fig. 2 ein Diagramm über den Verlauf der Abweichung vom Arbeitspunkt eines Gierratensensors in Abhängigkeit von der Temperatur des Sensors gemäß Ausführungsbeispiel 1

Fig. 3 ein Diagramm über den Verlauf der Abweichung nach Fig.2 mit n-Korrekturwerten (Stützstellen $[\tau_n, \dot{\psi}_0(\tau_n)]$)

Fig. 4 ein Diagramm über den Verlauf der Abweichung vom Arbeitspunkt eines Gierratensensors in Abhängigkeit von der Temperatur des Sensors gemäß einem weiteren Beispiel

Fig. 5 ein Diagramm über den Verlauf der Abweichung nach Fig.4 mit zunächst zwei Korrekturwerten (Stützstellen $[\tau_n, \dot{\psi}_0(\tau_n)]$) Fig. 6 ein Diagramm nach Fig. 5 mit weiteren Korrekturwerten (Stützstellen $[\tau_n, \dot{\psi}_0(\tau_n)]$)

Fig. 7 ein Diagramm über den Verlauf der Abweichung vom Arbeitspunkt eines Gierratensensors in Abhängigkeit von der Temperatur des Sensors gemäß Ausführungsbeispiel 2

Fig. 8 ein Diagramm des Offset korrigierten Nullpunktfehlers

Fig. 9 ein Diagramm nach Fig.8 mit weiteren Korrekturwerten ((Stützstellen)

Es werden drei unterschiedliche Verfahren zum Abgleich des Gierratensensornullpunkts beschrieben, die die Abweichung vom Nullpunkt (Nullpunktfehler) des Gierratensensors in Abhängigkeit von der Umgebungstemperatur kompensieren. Die Verfahren sind auch für eine Nullpunktkorrektur der in dem Sensor-Modul angeordneten Bewegungssensoren geeignet.

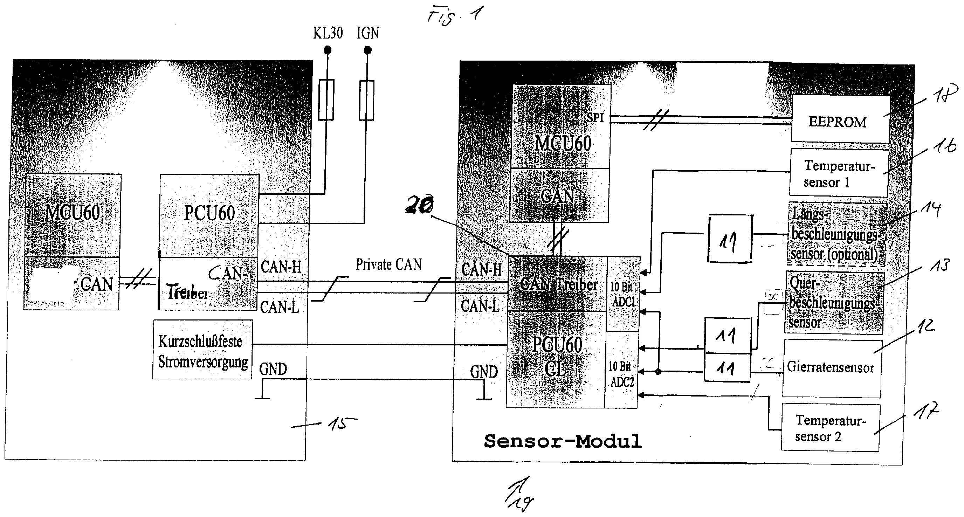

Wie Figur 1 zeigt, weist das Sensor-Modul 19 einen Microcontroller 10, eine Signalaufbereitungsstufe 11 und je nach Ausführung einen Gierratensensor 12, einen Querbeschleunigungssensor 13 und einen

Längsbeschleunigungssensor 14 auf. In dem Sensor-Modul generierte Daten werden über eine in dem Sensor-Modul vorgesehene CAN Schnittstelle 20 an einen übergeordneten Fahrdynamikregler 15 zur weiteren Datenverarbeitung gesendet, der seinerseits Informationen über Fahrzeugzustandsgrößen dem Sensor-Modul zur Verfügung stellt. Das Sensor-Modul weist zwei Temperatursensoren 16, 17 (redundante Ausbildung) und einen nicht-flüchtigen Speicher 18 auf.

Erstes Ausführungsbeispiel

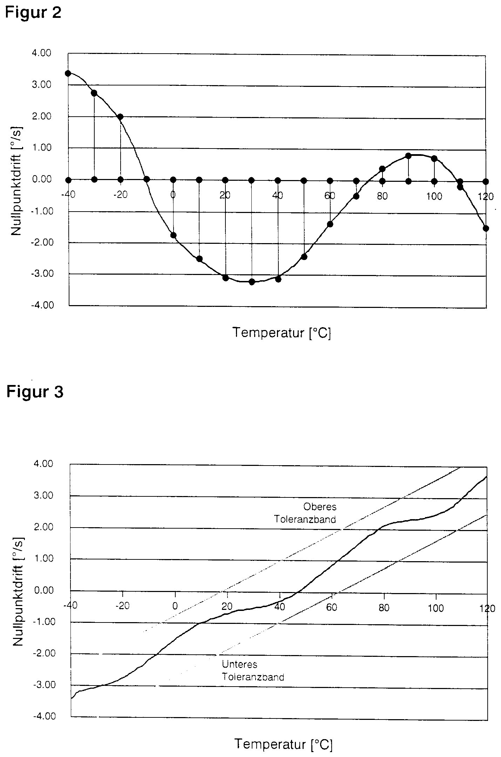

In der Figur 2 ist ein möglicher Nullpunktfehler [°/s] eines Gierratensensors in Abhängigkeit von der Temperatur [°C] des Sensors dargestellt.

Bei der Prüfung des Sensor-Moduls 19 wird dieser in einen speziellen Kalibriermodus geschaltet. Danach durchläuft das Sensor-Modul 19 in einem Temperaturofen ein festgelegtes Temperaturprofil. Dabei wird von der Software im Sensor-Modul 19 automatisch die Temperatur und die Abweichung vom Nullpunkt des Gierratensensors erfasst. Die Abweichung kann dabei auch 0°/s betragen, d.h. es werden beim Durchlaufen des Temperaturprofils auch Stellen ermittelt, wo kein Nullpunkfehler bei der gemessenen Temperatur auftritt. Die gemessenen Daten werden klassifiziert und im nicht-flüchtigen Speicher 18 des Sensor-Moduls 19 abgelegt. Der Kalibriermodus wird danach verlassen.

Zur Nullpunktkorrektur des Gierratensensors stehen damit, wie in Figur 3 dargestellt, n-Korrekturwerte als Stützstellen $[\tau_n, \dot{\psi}_0(\tau_n)]$ zur Verfügung.

Im Betrieb wird die Temperatur des Sensor-Moduls 19 ständig gemessen und mit diesem Wert der Nullpunktfehler des Gierratensensors mit Hilfe der abgelegten Stützstellen nach der folgenden Beziehung berechnet:

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n)$$

$$\text{für } \tau_n \leq \tau < \tau_{n+1} \hspace{3cm} \text{Gleichung 1}$$

Das über den CAN-Bus ausgesendete Gierratensignal berechnet sich aus dem gemessenen Sensorsignal und dem berechneten Nullpunkt des Gierratensensors nach der folgenden Beziehung:

$$\dot{\psi}_{Sensor-Modul} = \dot{\psi}_{sensor} - \dot{\psi}_0(\tau) \hspace{3cm} \text{Gleichung 2}$$

Mit Hilfe dieses Verfahrens kann auch ein langsamer Nullpunktdrift des Gierratensensors, der zum Beispiel auf Alterungseffekte der verwendeten Bauelemente zurückzuführen ist, kompensiert werden.

Bei erkanntem Fahrzeugstillstand, beispielsweise über die auswertung der Raddrehzahlen, wird die Temperatur des Sensor-Moduls 19 und die Gierrate gemessen. Diese Werte werden einer der im nicht-flüchtigen Speicher 18 (EEPROM) abgelegten Temperaturklassen zugeordnet. Durch ein geeignetes Verfahren wird der Mittelwert des bereits abgespeicherten Nullpunkts des Gierratensensors und des neu gemessenen Werts ermittelt. Das Ergebnis wird anstelle des alten Werts im nicht-flüchtigen Speicher 18 des Sensor-Moduls 19 abgelegt.

Die Information über den sicher erkannten Fahrzeugstillstand erhält das Sensor-Modul 19 von einem übergeordneten Fahrzeug-Regler, vorzugsweise dem Fahrdynamikregler.

Das oben beschriebene Verfahren läßt sich bis auf das Nachführen der im nicht-flüchtigen Speicher 18 abgelegten Daten bei Fahrzeugstillstand auch auf die Beschleunigungssensoren anwenden. Bei diesen Sensoren ist eine Korrektur der bei der Prüfung ermittelten Werte im Fahrzeugstillstand nicht möglich, da das Signal dieser Sensoren durch den Einfluß der Erdbeschleunigung verfälscht werden kann. Der Längsbeschleunigungssensor mißt nicht nur die Fahrzeuglängsbeschleunigung, dem Signal werden am Berg Anteile der Erdbeschleunigung überlagert. Genauso enthält das Querbeschleunigungssignal Anteile der Erdbeschleunigung, wenn das Fahrzeug entlang einer quergeneigten Fahrbahn steht. Diese Störgrößen müssen erfaßt und aus dem gemessenen Signalen herausgerechnet werden , um ein Nachführen der bei der Prüfung ermittelten Nullpunktwerte zu ermöglichen. Weiteres Beispiel In der Figur 3 ist ein möglicher Nullpunktfehler eines Gierratensensors in Abhängigkeit von der Temperatur des Sensors dargestellt. Im Gegensatz zu dem Verfahren nach dem Ausführungsbeispiel 1 ist die Nichtlinearität des Nullpunktfehles begrenzt, der Nullpunktfehler des Sensors bewegt sich in Abhängigkeit von der Temperatur nur noch zwischen einem oberen und einem unteren Toleranzband.

Bei der Prüfung des Sensor-Moduls 19 wird dieser in einen speziellen Kalibriermodus geschaltet. Danach durchläuft das Sensor-Modul 19 in einem Temperaturofen ein festgelegtes Temperaturprofil. Dabei wird von der Software im Sensor-Modul 19 automatisch die Temperatur und der Nullpunktfehler des Gierratensensors an zwei Stützstellen erfaßt, die idealerweise in der Nähe des Minimums bzw. in der Nähe des Maximums des zulässigen Temperaturbereichs liegen. Der Kalibriermodus wird danach verlassen.

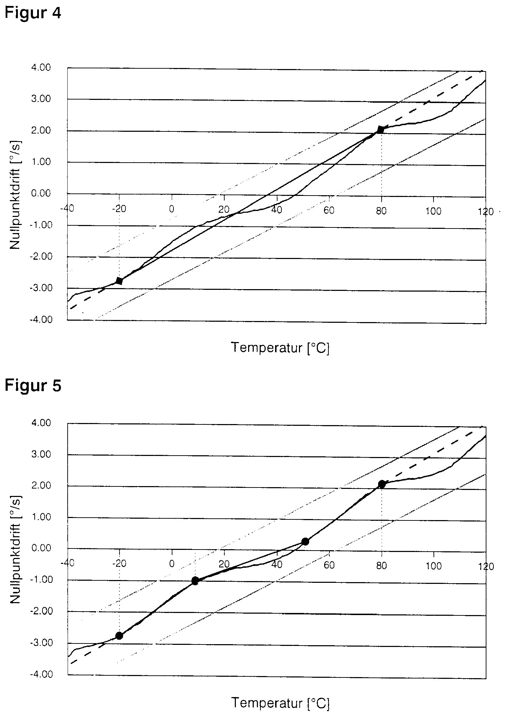

Zur Nullpunktkorrektur des Gierratensensors stehen damit, wie in Figur 4 dargestellt, zunächst zwei Korrek-turwerte bzw. Stützstellen $[\tau_n, \dot{\psi}_0(\tau_n)]$ zur Verfügung.

Im Betrieb des Fahrzeugs wird die Temperatur des Sensor-Moduls 19 ständig gemessen und mit diesem Wert der Nullpunkt des Gierratensensors mit Hilfe der abgelegten Korrekturwerte nach der folgenden Beziehung berechnet:

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n)$$

für $\tau_n \leq \tau < \tau_{n+1}$

Gleichung 1

Das über den CAN-Bus 20 ausgesendete Gierratensignal berechnet sich aus dem gemessenen Sensorsignal und dem berechneten Nullpunkt des Gierratensensors nach der folgenden Beziehung :

$$\dot{\psi}_{Sensor-Modul} = \dot{\psi}_{sensor} - \dot{\psi}_0(\tau)$$

Gleichung 2

Mit Hilfe dieses Verfahrens kann auch ein langsamer Nullpunktdrift des Gierratensensors, kompensiert und der Nullpunktfehler des Gierratensensors im Laufe der Betriebszeit des Sensor-Moduls 19 minimiert werden:

Bei erkanntem Fahrzeugstillstand wird die Temperatur des Sensor-Moduls 19 und die Gierrate gemessen. Diese Werte werden einer der im nicht-flüchtigen Speicher 18 abgelegten Temperaturklassen zugeordnet.

Durch ein geeignetes Verfahren wird der Mittelwert des bereits abgespeicherten Gierratensensornullpunkts und des neu gemessenen Werts ermittelt und im nicht-flüchtigen Speicher 18 des Sensor-Moduls 19 abgelegt, wenn bereits ein Korrekturwert für den Nullpunkt in dieser Temperaturklasse vorhanden ist. Wurde noch kein gültiger Nullpunkt in dieser Temperaturklasse ermittelt, dann wird das gemessene Signal im nicht-flüchtigen Speicher 18 des Sensor-Moduls 19 abgelegt.

Somit verringert sich der Nullpunktfehler des Gierratensignals im Laufe der Betriebszeit des Sensor-Moduls 19, indem immer mehr Stützstellen mit gemessenen Korrekturwerten aufgefüllt werden, wie Figur 5 zeigt.

Die Information über den sicher erkannten Fahrzeugstillstand erhält das Sensor-Modul 19 auch hier von einem übergeordneten Fahrzeug-Regler, vorzugsweise von dem Fahrdynamikregler. Wie bereits bei dem Ausführungsbeispiel 1 beschrieben, läßt sich das oben beschriebene Verfahren bis auf das Nachführen der im nicht-flüchtigen Speicher abgelegten Daten bei Fahrzeugstillstand auch auf die Beschleunigungssensoren ohne zusätzliche Berechnung von Störgrößen anwenden. Es ist jedoch nur dann anwendbar, wenn die Nichtlinearität der Nullpunktfehler dieser Sensoren gering ist.

Ausführungsbeispiel 2

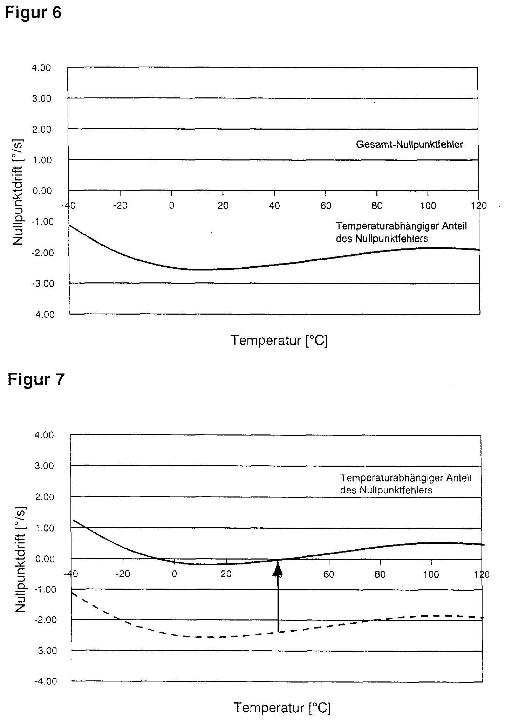

In der Figur 6 ist ein möglicher Nullpunktfehler eines Gierratensensors in Abhängigkeit von der Temperatur des Sensors dargestellt.

Der Gesamtnullpunktfehler des Gierratensensors besteht aus einem nicht-temperaturabhängigen Anteil, der im wesentlichen von Bauteiltoleranzen des Gierratensensor bestimmt wird, und einem temperaturabhängigen Anteil.

Bei der Prüfung des Sensor-Moduls 19 wird dieser in einen speziellen Kalibriermodus geschaltet. Danach wird die bei einer bestimmten Temperatur, die idealer weise in der Nähe der Betriebstemperatur des Sensor-Moduls 19 liegt, gemessene Gierrate im nicht-flüchtigen Speicher 18 des Sensor-Moduls 19 abgelegt und der Kalibriermodus wieder verlassen.

Durch diesen Kalibrierzyklus wird der Anteil des Nullpunktfehlers des Gierratensensors, der durch die Bauteiltoleranzen des Sensors bestimmt wird, kompensiert. Der verbleibende Nullpunktfehler ist in Figur 7 dargestellt. Zur Nullpunktkorrektur des Gierratensignals steht damit zunächst nur ein Wert zur Verfügung. Das über den CAN-Bus 20 gesendete Gierratensignal berechnet sich damit aus dem gemessenen Sensorsignal und dem abgelegten Nullpunkt des Gierratensensors nach der Beziehung:

$$\dot{\psi}_{Sensor-Modul} = \dot{\psi}_{sensor} - \dot{\psi}_0(\tau)$$

Gleichung 2

Dabei ist $\dot{\psi}_0(\tau)$ der in dem nicht-flüchtigen Speicher abgelegte einzige Korrekturwert, der zur Korrektur des Sensorsignals herangezogen wird.

Im weiteren Betrieb des Sensor-Moduls 19 kann auch ein langsamer Nullpunktdrift des Gierratensensors kompensiert und der Nullpunktfehler des Gierratensensors im Laufe der Betriebszeit des Sensor-Moduls 19 minimiert werden. Es wird das gleiche Abgleichverfahren wie bei den vorangegangenen Beispielen verwendet.

Bei erkanntem Fahrzeugstillstand wird die Temperatur des Sensor-Moduls 19 und die Gierrate gemessen. Diese Werte werden einer der im nicht-flüchtigen Speicher 18 abgelegten Temperaturklassen zugeordnet.

Durch ein geeignetes Verfahren wird der Mittelwert des bereits abgespeicherten Gierratensensornullpunkts und des neu gemessenen Korrekturwerts ermittelt und im nicht-flüchtigen Speicher 18 des Sensor-Moduls 19 abgelegt, wenn bereits ein Wert für den Nullpunktfehler in dieser Temperaturklasse vorhanden ist.

Wurde noch kein gültiger Nullpunktfehler in dieser Temperaturklasse ermittelt, dann wird das gemessene Signal im nicht-flüchtigen Speicher des Sensor-Modul 19s abgelegt. Während des Betriebs des Fahrzeugs wird die Temperatur des Sensor-Moduls dann fortlaufend erfasst und der Korrekturwert $\dot{\psi}(\tau)$ für das Sensorssignal $\dot{\psi}_{Sensor-Modul}$ nach der Beziehung

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n) \qquad mit \quad n \geq 2$$

$$\text{für} \quad \tau_n \leq \tau < \tau_{n+1}$$

berechnet und die Tabelle mit den berechneten Korrekturwerten ergänzt.

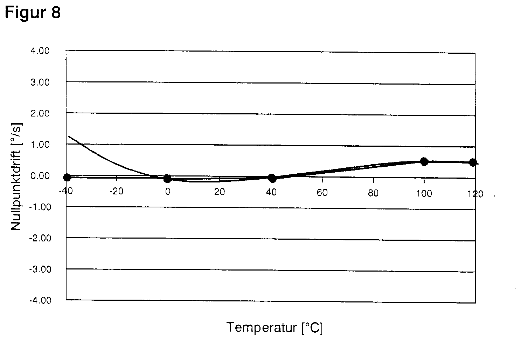

Somit verringert sich der Nullpunktfehler des Gierratensignals im Laufe der Betriebszeit des Sensor-Moduls 19, indem immer mehr Stützstellen (Figur 8) mit gemessenen Korrekturwerten aufgefüllt werden.

Die Information über den sicher erkannten Fahrzeugstillstand erhält das Sensor-Modul 19 auch hier von einem übergeordneten Fahrzeug-Regler.

Dieses Verfahren lässt sich auf den Gierratensensor anwenden, da das Gierratensignal bei Fahrzeugstillstand eindeutig zu identifizieren ist. Auf die Beschleunigungssensoren kann dieses Verfahren nur angewendet werden, wenn das Signal dieser Sensoren bei Fahrzeugstillstand um die auf einer geneigten Fahrbahn durch die Erdbeschleunigung verfälschenden Störgrößen bereinigt wird.

**Patentansprüche**

1. Verfahren zum Ermitteln eines korrigierten Sensorsignals nach Maßgabe einer erfassten Temperatur sowie nach Maßgabe einer Korrekturwerttabelle zur Erkennung von Nullpunktabweichungen in einem Sensor-Modul (19) eines Fahrzeugs, in dem mindestens ein, vorzugsweise mindestens zwei die Bewegung des Fahrzeugs erfassende Sensor(en) (12, 13, 14) und mindestens ein Temperatursensor (16, 17) vorgesehen sind mit den Schritten

   - Ermitteln von Abweichungen von Nullpunkten des Sensors (12, 13, 14) in einem Kalibriermodus beim Durchlaufen eines Temperaturprofils und
   - Klassifizieren der Abweichungen von den Nullpunkten des Sensors (12, 13, 14) und Zuordnung von Temperaturwerten bzw. - klassen zu den Abweichungen,
   - Ermitteln der Temperatur des Sensor-Moduls (19)
   - Auslesen eines Korrekturwerts aus der Tabelle nach Maßgabe des Werts der Temperatur, und
   - Korrigieren des Sensorsignals mit dem Korrekturwert,

   **dadurch gekennzeichnet, dass** während des Betriebs des Fahrzeugs dem Sensor-Modul (19) über einen seriellen Datenbus (20) von einem Fahrdynamikregler (15) eine Fahrzeugzustandsgröße zur Verfügung gestellt wird, die einen Fahrzeugstillstand anzeigt, und das Sensor-Modul (19) die Temperatur und die Abweichung vom Nullpunkt mindestens eines Sensors (12, 13, 14) bei Fahrzeugstillstand ermittelt, wobei die bei Fahrzeugstillstand ermittelte Abweichung als Korrekturwert für die bei dem Temperaturwert bzw. in der Temperaturklasse abgelegte Abweichung herangezogen wird oder als weiterer Korrekturwert in einem nicht-flüchtigen Speicher (18) abgelegt wird.

2. Verfahren nach Anspruch 1, **dadurch gekennzeichnet, dass** die Temperaturwerte bzw. -klassen und die Abweichungen oder Größen, die diese Abweichungen widerspiegeln, als Korrekturwerte gespeichert werden.

3. Verfahren nach einem der Ansprüche 1 bis 2, **dadurch gekennzeichnet, dass** zur Korrektur der Mittelwert zwischen der in der Tabelle abgelegten und der bei Fahrzeugstillstand ermittelten Abweichung berechnet wird.

4. Verfahren nach einem der Ansprüche 1 bis 3 , **dadurch gekennzeichnet, dass** der Fahrzeugstillstand über den Verlauf der Gierrate und/oder der Längs- und/oder Querbeschleunigung und/oder die Raddrehzahlen ermittelt wird.

5. Verfahren nach Anspruch 1, **dadurch gekennzeichnet, dass** das Sensorsignal direkt mit der abhängig von dem Temperaturwert bzw. der Temperaturklasse in der Tabelle abgespeicherten Abweichung korrigiert wird.

6. Verfahren nach Anspruch 1 oder 5, **dadurch gekennzeichnet, dass** die Korrektur des von dem Sensor-Modul zur Verfügung gestellten Sensorsignals $\dot{\psi}_{Sensor\text{-}Modul}$ nach der Beziehung

$$\dot{\psi}_{Sensor-Modul} = \dot{\psi}_{Sensor} - \dot{\psi}_0(\tau)$$

berechnet wird, mit $\dot{\psi}_{Sensor}$ = gemessenes Sensorsignal, $\dot{\psi}_0(\tau)$ = in der Tabelle abgespeicherte Abweichung, abhängig von dem Temperaturwert bzw. der Temperaturklasse.

7. Verfahren nach einem der Ansprüche 1, 5 oder 6 **dadurch gekennzeichnet, dass** die nicht in der Tabelle gespeicherten Korrekturwerte über ein Interpolationsverfahren berechnet werden.

8. Verfahren nach Anspruch 1 oder 7, **dadurch gekennzeichnet, dass** während des Betriebs des Fahrzeugs die Temperatur des Sensor-Moduls (19) fortlaufend erfasst wird und der Korrekturwert $\dot{\psi}(\tau)$ für das Sensorsignal $\dot{\psi}_{Sensor\text{-}Modul}$ nach der Beziehung

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n)$$
$$\text{für} \quad \tau_n \leq \tau < \tau_{n+1}$$

berechnet wird, mit $\dot{\psi}_0(\tau)$ = Korrekturwert bei der erfassten Temperatur, $\dot{\psi}_0(\tau_n)$ = Korrekturwert bei dem in der Korrekturwerttabelle abgelegten niedrigeren Temperaturwert, $\dot{\psi}_0(\tau_{n+1})$ = Korrekturwert bei dem in der Korrekturwerttabelle abgelegten höheren Temperaturwert, $\tau$ = erfasster Temperaturwert, $\tau_n$ = niedrigerer Temperaturwert, $\tau_{n+1}$ = höherer Temperaturwert.

9. Verfahren nach Anspruch 7 oder 8, **dadurch gekennzeichnet, dass** die berechnete Abweichung vom Nullpunkt in der Korrekturwerttabelle nach den Ansprüchen 1 bis 4 gespeichert wird.

10. Verfahren nach einem der Ansprüche 1 bis 9, **dadurch gekennzeichnet, dass** mindesten zwei Abweichungen in einem Bereich der maximal und minimal zulässigen Temperatur des Sensor-Moduls (19) ermittelt und als Korrekturwerte abgespeichert werden, wenn der Verlauf der Abweichungen linear innerhalb eines Toleranzbandes vorgegeben wird.

11. Verfahren zum Ermitteln eines korrigierten Sensorsignals nach Maßgabe einer erfassten Temperatur sowie nach Maßgabe einer Korrekturwerttabelle zur Erkennung von Nullpunktabweichungen in einem Sensor-Modul (19) eines Fahrzeugs, in dem mindestens ein, vorzugsweise mindestens zwei die Bewegung des Fahrzeugs erfassende Sensor(en) (12, 13, 14) und mindestens ein Temperatursensor (16, 17) vorgesehen sind mit den Schritten

    - Ermitteln von einer Abweichung von dem Nullpunkt des Sensorsignals in einem Kalibriermodus bei einer vorgegebenen Temperatur und
    - Speichern des um die Abweichung korrigierten Nullpunkts des Sensorsignals bei dem Temperaturwert als Korrekturwert
    - Ermitteln der Temperatur des Sensor-Moduls (19) während des Betriebs des Fahrzeugs
    - Auslesen des Korrekturwerts aus einem Speicher (18), und
    - Korrigieren des Sensorsignals mit dem Korrekturwert nach der Beziehung $\dot{\psi}_{Sensor\text{-}Modul}$ = $\dot{\psi}_{Sensor}$ - $\dot{\psi}_0(\tau)$,

**dadurch gekennzeichnet, dass** während des Betriebs des Fahrzeugs dem Sensor-Modul (19) über einen seriellen Datenbus (20) von einem Fahrdynamikregler (15) eine Fahrzeugzustandsgröße zur Verfügung gestellt wird, die einen Fahrzeugstillstand anzeigt, und das Sensor-Modul (19) die Temperatur und die Abweichung von dem Nullpunkt mindestens eines Sensorsignals bei Fahrzeugstillstand ermittelt, wobei die bei Fahrzeugstillstand ermittelte Abweichung als Korrekturwert für die bei dem Temperaturwert abgelegte Abweichung herangezogen oder als weiterer Korrekturwert im Speicher (18) abgelegt wird.

12. Verfahren nach Anspruch 11, **dadurch gekennzeichnet, dass** während des Betriebs des Fahrzeugs die Temperatur des Sensor-Moduls (19) fortlaufend erfasst wird und der Korrekturwert $\dot{\psi}(\tau)$ für das Sensorsignal $\dot{\psi}_{Sensor\text{-}Modul}$ nach der Beziehung

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n) \qquad mit \quad n \geq 2$$

$$\text{für} \quad \tau_n \leq \tau < \tau_{n+1}$$

berechnet wird, mit $\dot{\psi}_0(\tau)$ = Korrekturwert bei der erfassten Temperatur, $\dot{\psi}_0(\tau_n)$ = Korrekturwert bei dem in der Korrekturwerttabelle abgelegten niedrigeren Temperaturwert, $\dot{\psi}_0(\tau_{n+1})$ = Korrekturwert bei dem in der Korrekturwerttabelle abgelegten höheren Temperaturwert, $\tau$ = erfasster Temperaturwert, $\tau_n$ = niedrigerer Temperaturwert, $\tau_{n+1}$ = höherer Temperaturwert, n = Anzahl der abgelegten Korrekturwerte.

13. Sensor-Modul (19) zum Ermitteln eines korrigierten Sensorsignals mit dem Verfahren nach einem der Ansprüche 1 bis 3 nach Maßgabe einer erfassten Temperatur, in dem mindestens ein, vorzugsweise mindestens zwei die Bewegung des Fahrzeugs erfassende Sensor(en) (12, 13, 14) und mindestens ein Temperatursensor (16, 17) vorgesehen sind und das ferner eine Signalverarbeitungseinheit (10) und einen Digitalausgang mit einer Schnittstelle für einen Datenbus (20) aufweist **gekennzeichnet durch** einen nicht-flüchtigen Speicher (18) zum ablegen der erstellten Korrekturwerttabelle.

14. Sensor-Modul nach Anspruch 13, **gekennzeichnet durch** mindestens einen Gierratensensor (12), einen Längs- (14) und einen Querbeschleunigungssensor (13) und zwei Temperatursensoren (16, 17).

**Claims**

1. Method for determining a corrected sensor signal according to a recorded temperature and according to a table of correction values for the purpose of identifying zero point deviations in a sensor module (19) of a vehicle, in which at least one sensor, preferably at least two sensors (12, 13, 14), recording the movement of the vehicle and at least one temperature sensor (16, 17) are provided, having the steps of

   - determining deviations from zero points of the sensor (12, 13, 14) in a calibration mode when running through a temperature profile, and
   - classifying the deviations from the zero points of the sensor (12, 13, 14) and assigning temperature values or classes to the deviations,
   - determining the temperature of the sensor module (19),
   - reading a correction value from the table according to the value of the temperature, and
   - correcting the sensor signal using the correction value,

   **characterized in that**, during operation of the vehicle, the sensor module (19) is provided, via a serial data bus (20), with a vehicle state variable indicating a vehicle standstill by a driving dynamics controller (15), and the sensor module (19) determines the temperature and the deviation from the zero point of at least one sensor (12, 13, 14) when the vehicle is at a standstill, the deviation determined when the vehicle is at a standstill being used as the correction value for the deviation stored for the temperature value or in the temperature class or being stored as a further correction value in a non-volatile memory (18).

2. Method according to Claim 1, **characterized in that** the temperature values or classes and the deviations or variables reflecting these deviations are stored as correction values.

3. Method according to one of Claims 1 to 2, **characterized in that** the mean value between the deviation stored in the table and the deviation determined when the vehicle is at a standstill is calculated for the purpose of correction.

4. Method according to one of Claims 1 to 3, **characterized in that** the vehicle standstill is determined using the profile of the yaw rate and/or the longitudinal acceleration and/or lateral acceleration and/or the wheel speeds.

5. Method according to Claim 1, **characterized in that** the sensor signal is directly corrected using the deviation stored in the table on the basis of the temperature value or the temperature class.

6. Method according to Claim 1 or 5, **characterized in that** the correction of the sensor signal $\dot{\psi}_{Sensor\text{-}Modul}$ provided by the sensor module is calculated according to the relationship,

$$\dot{\psi}_{Sensor-Modul} = \dot{\psi}_{Sensor} - \overline{\dot{\psi}_0(\tau)} \quad,$$

where $\dot{\psi}_{Sensor}$ = measured sensor signal, $\dot{\psi}_0(\tau)$ = deviation stored in the table on the basis of the temperature value or the temperature class.

7.  Method according to one of Claims 1, 5 and 6, **characterized in that** the correction values which are not stored in the table are calculated using an interpolation method.

8.  Method according to Claim 1 or 7, **characterized in that** the temperature of the sensor module (19) is continuously recorded during operation of the vehicle, and the correction value $\dot{\psi}(\tau)$ for the sensor signal is calculated according to the relationship

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n)$$

$$\text{for} \quad \tau_n \le \tau < \tau_{n+1} \quad,$$

where $\dot{\psi}_0(\tau)$ = correction value for the recorded temperature, $\dot{\psi}_0(\tau_n)$ = correction value for the lower temperature value stored in the table of correction values, $\dot{\psi}_0(\tau_{n+1})$ = correction value for the higher temperature value stored in the table of correction values, $\tau$ = recorded temperature value, $\tau_n$ = lower temperature value, $\tau_{n+1}$ = higher temperature value.

9.  Method according to Claim 7 or 8, **characterized in that** the calculated deviation from the zero point is stored in the table of correction values according to Claims 1 to 4.

10. Method according to one of Claims 1 to 9, **characterized in that** at least two deviations are determined in a range of the maximum and minimum permissible temperature of the sensor module (19) and are stored as correction values if the profile of the deviations is linearly predefined within a tolerance band.

11. Method for determining a corrected sensor signal according to a recorded temperature and according to a table of correction values for the purpose of identifying zero point deviations in a sensor module (19) of a vehicle, in which at least one sensor, preferably at least two sensors (12, 13, 14), recording the movement of the vehicle and at least one temperature sensor (16, 17) are provided, having the steps of

    - determining a deviation from the zero point of the sensor signal in a calibration mode at a predefined temperature, and
    - storing the zero point of the sensor signal, which has been corrected by the deviation, for the temperature value as a correction value,
    - determining the temperature of the sensor module (19) during operation of the vehicle,
    - reading the correction value from a memory (18), and
    - correcting the sensor signal using the correction value according to the relationship

$$\dot{\psi}_{Sensor-Modul} = \dot{\psi}_{Sensor} - \dot{\psi}_0(\tau) \quad,$$

**characterized in that**, during operation of the vehicle, the sensor module (19) is provided, via a serial data bus (20), with a vehicle state variable indicating a vehicle standstill by a driving dynamics controller (15), and the sensor module (19) determines the temperature and the deviation from the zero point of at least one sensor signal when the vehicle is at a standstill, the deviation determined when the vehicle is at a standstill being used as the correction value for the deviation stored for the temperature value or being stored as a further correction value in the memory (18).

12. Method according to Claim 11, **characterized in that**, the temperature of the sensor module (19) is continuously recorded during operation of the vehicle and the correction value $\dot{\psi}(\tau)$ for the sensor signal $\dot{\psi}_{Sensor-Modul}$ is calculated according to the relationship

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times \left(\tau - \tau_n\right)$$

where n ≥ 2

for $\tau_n \leq \tau < \tau_{n+1}$,

where $\dot{\psi}_0(\tau)$ = correction value for the recorded temperature, $\dot{\psi}_0(\tau_n)$ = correction value for the lower temperature value stored in the table of correction values, $\dot{\psi}_0(\tau_{n+1})$ = correction value for the higher temperature value stored in the table of correction values, $\tau$ = recorded temperature value, $\tau_n$ = lower temperature value, $\tau_{n+1}$ = higher temperature value, n = number of stored correction values.

**13.** Sensor module (19) for determining a corrected sensor signal using the method according to one of Claims 1 to 3 according to a recorded temperature, in which at least one sensor, preferably at least two sensors (12, 13, 14), recording the movement of the vehicle and at least one temperature sensor (16, 17) are provided and which also has a signal processing unit (10) and a digital output with an interface for a data bus (20), **characterized by** a non-volatile memory (18) for storing the created table of correction values.

**14.** Sensor module according to Claim 13, **characterized by** at least one yaw rate sensor (12), a longitudinal acceleration sensor (14) and a lateral acceleration sensor (13) and two temperature sensors (16, 17).

**Revendications**

**1.** Procédé pour déterminer un signal de capteur corrigé en fonction d'une température détectée et en fonction d'une table de valeurs de correction permettant d'identifier des écarts par rapport au point zéro dans un module à capteurs (19) d'un véhicule dans lequel il est prévu au moins un, et de préférence au moins deux capteur(s) (12, 13, 14) détectant le mouvement du véhicule et au moins un capteur de température (16, 17) comprenant les étapes consistant à

- déterminer des écarts par rapport à des points zéro du capteur (12, 13, 14) dans un mode d'étalonnage lorsqu'un profil de température est parcouru et
- classer les écarts par rapport aux points zéro du capteur (12, 13, 14) et associer des valeurs ou des classes de température aux écarts,
- déterminer la température du module à capteurs (19),
- lire une valeur de correction dans la table en fonction de la valeur de la température, et
- corriger le signal de capteur en utilisant la valeur de correction,

**caractérisé en ce que**, pendant le fonctionnement du véhicule, une grandeur d'état du véhicule qui indique l'état d'arrêt du véhicule est fournie au module à capteurs (19) par l'intermédiaire d'un bus de données série (20) d'un régulateur de dynamique de conduite (15), et **en ce que** le module à capteurs (19) détermine la température et l'écart par rapport au point zéro d'au moins un capteur (12, 13, 14) lorsque le véhicule est à l'arrêt, dans lequel l'écart déterminé lorsque le véhicule est à l'arrêt est pris en compte en tant que valeur de correction pour la valeur de température ou pour l'écart stocké dans la classe de température ou est stocké en tant qu'autre valeur de correction dans une mémoire non volatile (18).

**2.** Procédé selon la revendication 1, **caractérisé en ce que** les valeurs ou les classes de température et les écarts ou les grandeurs qui reflètent lesdits écarts sont stockés en tant que valeurs de correction.

**3.** Procédé selon l'une quelconque des revendications 1 à 2, **caractérisé en ce que** la valeur moyenne entre les écarts stockés dans la table et l'écart déterminé lorsque le véhicule est à l'arrêt est calculée.

**4.** Procédé selon l'une quelconque des revendications 1 à 3, **caractérisé en ce que** l'état d'arrêt du véhicule est déterminé par l'intermédiaire de la courbe de la vitesse de lacet et/ou de l'accélération longitudinale et/ou transversale et/ou des vitesses de rotation des roues.

**5.** Procédé selon la revendication 1, **caractérisé en ce que** le signal de capteur est directement corrigé en utilisant l'écart stocké dans la table en fonction de la valeur de température ou de la classe de température.

**6.** Procédé selon la revendication 1 ou 5, **caractérisé en ce que** la correction du signal de capteur $\dot{\psi}_{Sensor\text{-}Module}$ fourni par le module à capteurs est calculée conformément à l'équation

$$\dot{\psi}_{Sensor-Module} = \dot{\psi}_{Sensor} - \dot{\psi}_0(\tau)$$

où $\dot{\psi}_{Sensor}$ = signal de capteur mesuré, $\dot{\psi}_0(\tau)$ = écart stocké dans la table, en fonction de la valeur de température ou de la classe de températures.

**7.** Procédé selon l'une quelconque des revendications 1, 5 ou 6, **caractérisé en ce que** les valeurs de correction non stockées dans la table sont calculées par l'intermédiaire d'un procédé d'interpolation.

**8.** Procédé selon la revendication 1 ou 7, **caractérisé en ce que**, pendant le fonctionnement du véhicule, la température du module à capteurs (19) est détectée en continu et **en ce que** la valeur de correction $\dot{\psi}(\tau)$ destinée au signal de capteur $\dot{\psi}_{Sensor\text{-}Module}$ est calculée conformément à l'équation

$$\dot{\psi}_{S0}(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n)$$
$$\text{pour } \tau_n \leq \tau \leq \tau_{n+1},$$

où $\dot{\psi}_0(\tau)$ = valeur de correction pour la température détectée, $\dot{\psi}_0(\tau_n)$ = valeur de correction pour la valeur de température la plus faible stockée dans la table de valeurs de correction, $\dot{\psi}_0(\tau_{n+1})$ = valeur de correction pour la valeur de température la plus élevée stockée dans la table de valeurs de correction, $\tau$ = valeur de température détectée, $\tau_n$ = valeur de température la plus faible, $\tau_{n+1}$ = valeur de température la plus élevée.

**9.** Procédé selon la revendication 7 ou 8, **caractérisé en ce que** l'écart calculé par rapport au point zéro est stocké dans la table de valeurs de correction selon les revendications 1 à 4.

**10.** Procédé selon l'une quelconque des revendications 1 à 9, **caractérisé en ce qu'**au moins deux écarts sont déterminés dans une plage comprise entre les températures maximale et minimale du module à capteurs (19) et sont stockés en tant que valeurs de correction lorsque la courbe des écarts est prédéterminée de manière linéaire à l'intérieur d'un intervalle de tolérance.

**11.** Procédé pour déterminer un signal de capteur corrigé en fonction d'une température détectée et en fonction d'une table de valeurs de correction permettant d'identifier des écarts par rapport au point zéro dans un module à capteurs (19) d'un véhicule, dans lequel il est prévu au moins un, et de préférence au moins deux capteur(s) (12, 13, 14) détectant le mouvement du véhicule et au moins un capteur de température (16, 17), comportant les étapes consistant à

- déterminer un écart par rapport au point zéro du signal de capteur dans un module d'étalonnage pour une température prédéterminée, et
- stocker le point zéro du signal de capteur, corrigé en fonction de l'écart pour la valeur de température en tant que valeur de correction,
- déterminer la température du module à capteurs (19) pendant le fonctionnement du véhicule,
- lire la valeur de correction dans une mémoire (18), et
- corriger le signal de capteur en utilisant la valeur de correction conformément à l'équation

$$\dot{\psi}_{Sensor-Module} = \dot{\psi}_{Sensor} - \dot{\psi}_0(\tau),$$

**caractérisé en ce que**, pendant le fonctionnement du véhicule, une grandeur d'état du véhicule est fournie au module à capteurs (19) par l'intermédiaire d'un bus de données série (20) d'un régulateur de dynamique de conduite (15), qui indique un état d'arrêt du véhicule, et **en ce que** le module à capteurs (19) détermine la température et l'écart par rapport au point zéro d'au moins un signal de capteur lorsque le véhicule est à l'arrêt, dans lequel l'écart déterminé lorsque le véhicule est à l'arrêt est pris en compte pour les écarts stockés pour la valeur de température ou est stocké en tant qu'autre valeur de correction dans la mémoire (18).

**12.** Procédé selon la revendication 11, **caractérisé en ce que**, pendant le fonctionnement du véhicule, la température du module à capteurs (19) est détectée en continu et la valeur de correction $\dot{\psi}(\tau)$ du signal de capteur $\dot{\psi}_{Sensor\text{-}Module}$ est calculée conformément à l'équation

$$\dot{\psi}_0(\tau) = \dot{\psi}_0(\tau_n) + \frac{\dot{\psi}_0(\tau_{n+1}) - \dot{\psi}_0(\tau_n)}{\tau_{n+1} - \tau_n} \times (\tau - \tau_n), \text{ avec } n \geq 2$$

$$\text{pour } \boldsymbol{\tau_n \leq \tau \leq \tau_{n+1}}$$

où $\dot{\psi}_0(\tau)$ = valeur de correction pour la température détectée, $\dot{\psi}_0(\tau_n)$ = valeur de correction pour la valeur de température la plus faible stockée dans la table de valeurs de correction, $\dot{\psi}_0(\tau_{n+1})$ = valeur de correction pour la valeur de température la plus élevée stockée dans la table de valeurs de correction, $\tau$ = valeur de température détectée, $\tau_n$ = valeur de température la plus faible, $\tau_{n+1}$ = valeur de température la plus élevée, n = nombre des valeurs de correction stockées.

**13.** Module à capteurs (19) destiné à déterminer un signal de capteur corrigé par le procédé selon l'une quelconque des revendications 1 à 3 en fonction d'une température détectée, dans lequel il est prévu au moins un, et de préférence au moins deux capteur(s) (12, 13, 14) détectant le mouvement du véhicule et au moins un capteur de température (16, 17) et comportant en outre une unité d'évaluation des signaux (10) et une sortie numérique ayant une interface destinée à un bus de données (20),
**caractérisé par** une mémoire non volatile (18) destinée à stocker la table de valeurs de correction établie.

**14.** Module à capteurs selon la revendication 13, **caractérisé par** au moins un capteur de vitesse de lacet (12), un capteur d'accélération longitudinale (14) et un capteur d'accélération transversale (13) et deux capteurs de température (16, 17).

Fig. 1

EEPROM

Temperatur-sensor 1

Längs-beschleunigungs-sensor (optional)

Quer-beschleunigungs-sensor

Gierratensensor

Temperatur-sensor 2

MCU60

SPI

CAN

CAN-Treiber

PCU60 (CL)

10 Bit ADC1

10 Bit ADC2

Sensor-Modul

CAN-H

CAN-L

GND

Private CAN

KL30   IGN

PCU60

CAN-Treiber

MCU60

CAN

CAN-H

CAN-L

Kurzschlußfeste Stromversorgung

GND

14

## Figur 2

Temperatur [°C]

## Figur 3

Temperatur [°C]

## Figur 4

Temperatur [°C]

## Figur 5

Temperatur [°C]

## Figur 6

Temperatur [°C]

## Figur 7

Temperatur [°C]

## Figur 8

Temperatur [°C]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4228893 A
- US 5038306 A